# EUROPEAN PATENT APPLICATION

(11) **EP 4 379 385 A1**
(43) Date of publication of application: **05.06.2024**
(21) Application number: 21951784.4
(22) Date of filing: 27.07.2021
(51) Int. Cl.: G01N 35/00

(54) **AUTOMATIC ANALYSIS DEVICE**

(71) Applicant: HITACHI HIGH-TECH CORPORATION, Tokyo 105-6409 (JP)
(72) Inventor: TERAYAMA, Hiroto, Tokyo 105-6409 (JP); NARIKAWA, Sakiko, Tokyo 105-6409 (JP); NISHIDA, Tetsuya, Tokyo 105-6409 (JP)
(74) Representative: MERH-IP Matias Erny Reichl Hoffmann Patentanwälte PartG mbB
(86) International application number: PCT/JP2021/027678
(87) International publication number: WO 2023/007573

(57) **Abstract**

The present invention comprises an analysis unit that analyzes a sample inside an area defined by partition walls, an inside environment control device that controls the state of the environment inside the analysis unit, an inside environment data acquisition device that measures the state of the environment inside the analysis unit, an outside environment data acquisition device that measures the state of the environment outside the analysis unit, a door that is provided in a partition wall between the inside and the outside of the analysis unit and allows access to the inside of the analysis unit from the outside, and a control device that controls whether the door can be opened/closed. The control device prohibits opening of the door when the analysis unit contains a sample that has not been completely analyzed, measurement results from the inside environment data acquisition device are within the range of predetermined inside environment specifications, and measurement results from the outside environment data acquisition unit are outside the range of predetermined outside environment specifications. The present invention thereby makes it possible to suppress the effects of the environment outside an inspection device on the environment inside the inspection device and to suppress reductions in the accuracy of inspection results due to changes in the environment inside the inspection device.

## Description

### Technical Field

The present invention relates to an automatic analysis device.

### Background Art

In inspection of biological samples, samples (biological samples, specimens) such as blood, urine, stool, cells, and the like collected from a living body are generally stored in an inspection device such as an automatic analysis device to acquire various types of data. Since biological samples are stored in the inspection device and held for a certain period of time, there is a possibility that accurate inspection results may not be obtained when the environment inside the inspection device such as temperature, humidity, and brightness is not maintained appropriately.

For example, in bacterial inspection, collected samples are dispensed into well plates coated with antibiotics, and the plates are monitored to analyze a pace at which bacteria grow. Here, cells will die when the temperature of the environment inside the inspection device becomes higher than a specified temperature, and moisture will evaporate when the humidity thereof becomes lower than a specified humidity, and thus a pace at which bacteria grow is different from normal (normal conditions). That is, in such a situation, accurate inspection results cannot be obtained. Thus, it is important to appropriately manage the environment inside the inspection device that stores the biological samples according to predetermined specifications.

As a technique related to temperature management of a reagent used for inspection in an inspection device, for example, a technique disclosed in PTL 1 is known. PTL 1 discloses an automatic analysis device that includes a sample container holding mechanism that holds a sample container accommodating a sample, a reagent container holding mechanism that holds a reagent container accommodating a reagent, a reaction container holding mechanism that holds a reaction container that mixes and reacts the sample and the reagent, a detection mechanism that measures a reaction liquid accommodated in the reaction container, a reagent temperature measurement mechanism that measures the temperature of the reagent accommodated in the reagent container, a reagent constant temperature mechanism that holds the reagent container under a predetermined constant temperature environment, a reagent temperature control unit that is provided in the reagent constant temperature mechanism and holds the reagent container under a changeable temperature environment, a reagent container transport mechanism that transports the reagent container inside the reagent constant temperature mechanism including the reagent temperature control unit, and a control device that controls a temperature environment in which the reagent container of the reagent temperature control unit is held based on a measurement result of the reagent temperature measurement mechanism.

### Citation List

### Patent Literature

PTL 1: JP2013-190400A

### Summary of Invention

### Technical Problem

Incidentally, when a new sample is carried into an inspection device or a sample that has been inspected is carried out, it is necessary to open and close a door of the inspection device. Here, air outside the inspection device flows into the inspection device, and thus there is a possibility that an environment inside the inspection device will not be in an appropriate state, that is, the environment inside the inspection device will deviate from the range of specifications. In particular, when an environment outside the inspection device is outside the range of specifications, there is a possibility that the environment inside the inspection device will change significantly when air outside the inspection device flows into the inspection device, thereby affecting the inspection results.

The invention has been made in view of the above-described circumstances, and an object thereof is to provide an automatic analysis device that can suppress influence of an environment outside an inspection device on an environment inside the inspection device and can suppress a decrease in accuracy of inspection results due to changes in the environment inside the inspection device.

### Solution to Problem

The present application includes a plurality of means for solving the above-described problems, and one example is an automatic analysis device that analyzes a sample to be analyzed to acquire inspection data, the device including an analysis unit that analyzes the sample within a region defined by a partition wall, an internal environment control device that controls an environmental state inside the analysis unit, an internal environment data acquisition device that measures the environmental state inside the analysis unit, an external environment data acquisition device that measures an environmental state outside the analysis unit, a door that is provided at the partition wall separating the inside and outside of the analysis unit and allows access from the outside to the inside of the analysis unit, and a control device that controls whether the door can be opened or closed, in which the control device prohibits opening of the door when there is a sample for which analysis has not been completed inside the analysis unit, a measurement result obtained by the internal environment data acquisition device falls within a range of predetermined internal environment specifications, and a measurement result obtained by the external environment data acquisition device falls outside a range of predetermined external environment specifications.

### Advantageous Effects of Invention

According to the invention, it is possible to suppress influence of an environment outside an inspection device on an environment inside the inspection device and suppress a decrease in accuracy of inspection results due to changes in the environment inside the inspection device.

### Brief Description of Drawings

[Fig. 1] Fig. 1 is a diagram schematically illustrating the appearance of an analysis unit that is a main part of an automatic analysis device.
[Fig. 2] Fig. 2 is a diagram schematically illustrating an internal configuration of the analysis unit.
[Fig. 3] Fig. 3 is a functional block diagram schematically illustrating processing functions of the automatic analysis device.
[Fig. 4] Fig. 4 is a diagram illustrating a display example of a screen display device, and is a diagram illustrating a state where a standard screen is displayed.
[Fig. 5] Fig. 5 is a diagram illustrating a display example of the screen display device, and is a diagram illustrating a state where a screen showing information indicating that opening of a door is prohibited is displayed.
[Fig. 6] Fig. 6 is a flowchart showing processing contents of door opening determination processing in a control device according to a first embodiment.
[Fig. 7] Fig. 7 is a flowchart showing processing contents of door opening determination processing in a control device according to a second embodiment.
[Fig. 8] Fig. 8 is a flowchart showing processing contents of door opening determination processing in a control device according to a third embodiment.

### Description of Embodiments

Embodiments of the invention will be described below with reference to the drawings.

In the present embodiment, an automatic analysis device that irradiates a sample with light to acquire a measured value is exemplified and described as an example of an automatic analysis device that analyzes a sample, but the invention is not limited thereto. The invention can also be applied to other automatic analysis devices that perform analysis in an environment separated from the outside.

### <First Embodiment>

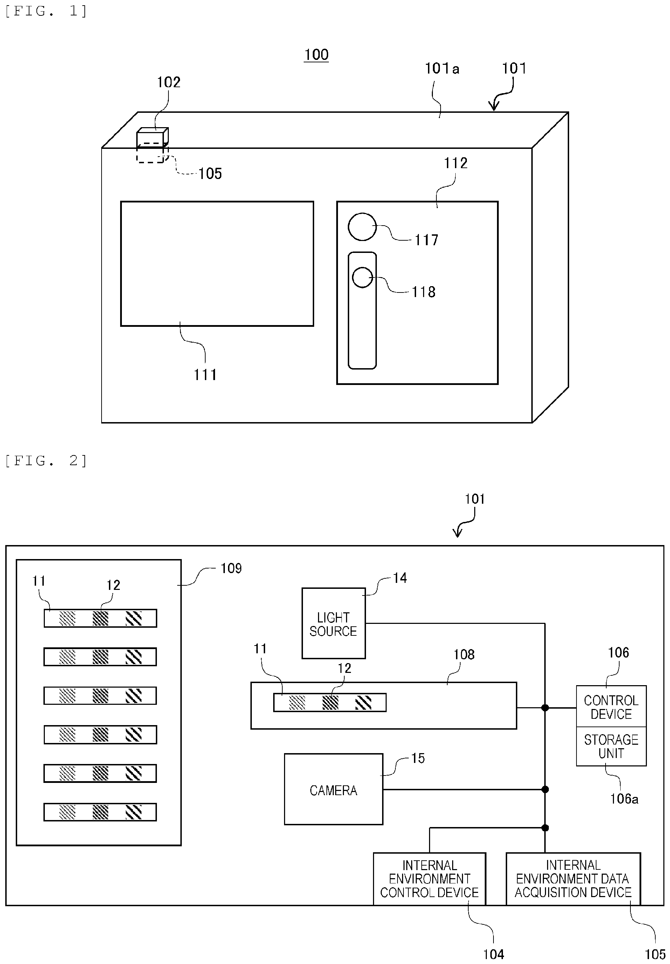

A first embodiment of the invention will be described with reference to Figs. 1 to 7.

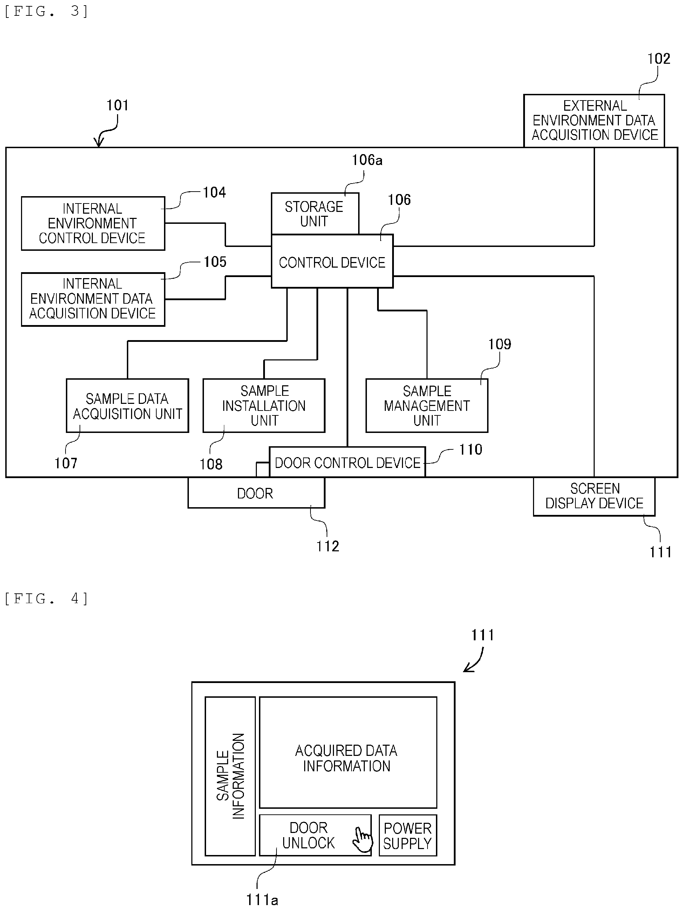

Fig. 1 is a diagram schematically illustrating the appearance of an analysis unit which is a main part of an automatic analysis device. Fig. 2 is a diagram schematically illustrating an internal configuration of the analysis unit. Fig. 3 is a functional block diagram schematically illustrating processing functions of the automatic analysis device.

As illustrated in Figs. 1 and 3, an automatic analysis device 100 includes an analysis unit 101 that analyzes a sample within a region defined by a partition wall 101a, an external environment data acquisition device 102 that measures an environmental state outside the analysis unit 101, an internal environment data acquisition device 105 (disposed inside the analysis unit 101) that measures an environmental state inside the analysis unit 101, a door 112 that is provided on the partition wall 101a separating the inside and outside of the analysis unit 101 and permits access from the outside to the inside of the analysis unit 101, and a screen display device 111 which is an input/output interface having a function of presenting information to an operator using a screen or the like and a function of inputting information using a touch panel or the like.

The analysis unit 101 is configured such that the inside and outside thereof are separated from each other by covering a region for analyzing a sample with the partition wall 101a, and is configured to suppress influence of an environmental state outside the analysis unit 101 on an environmental state inside the analysis unit 101. The partition wall 101a separates the inside and outside of the analysis unit 101 to suppress the influence of the external environment of the analysis unit 101 on the internal environment, is configured to maintain a sample holding environment and a sample analysis environment inside the analysis unit 101, and has a heat insulation function, a light shielding function, a sealing function, and the like.

The external environment data acquisition device 102 is a sensor that measures, for example, a temperature, a humidity, an atmospheric pressure, a brightness (light intensity), and the like as environmental states outside the analysis unit 101 (partition wall 101a). The external environment data acquisition device 102 includes a circuit board, software, and the like. When the external environment data acquisition device 102 is a resistance thermometer that measures a temperature, the external environment data acquisition device 102 includes a resistance temperature detector, a thermistor, and the like. When the external environment data acquisition device 102 is a non-contact thermometer, the external environment data acquisition device 102 includes a thermography and the like. When the external environment data acquisition device 102 is a radiation thermometer, the external environment data acquisition device 102 includes an irradiation portion and a light receiving portion. When the external environment data acquisition device 102 is a hygrometer that measures a humidity, the external environment data acquisition device 102 includes a moisture-sensitive film, a moisture-sensitive material, or the like. When the external environment data acquisition device 102 is an illuminance meter that measures an illuminance, the external environment data acquisition device 102 includes a photodiode, an optical filter, and the like. When the external environment data acquisition device 102 is a barometer that measures an atmospheric pressure, the external environment data acquisition device 102 includes a semiconductor and a chamber. The external environment data acquisition device 102 may be configured to acquire data on one type of environmental state or may be configured to acquire data on a plurality of types of environmental states, or a plurality of external environment data acquisition devices 102 that acquire data on different types of environmental states may be provided.

The internal environment data acquisition device 105 is a sensor that measures, for example, a temperature, a humidity, an atmospheric pressure, a brightness (light intensity), and the like as environmental states inside the analysis unit 101 (partition wall 101a). The internal environment data acquisition device 105 includes a circuit board, software, and the like. When the internal environment data acquisition device 105 is a resistance thermometer that measures a temperature, the internal environment data acquisition device 105 includes a resistance temperature detector, a thermistor, and the like. When the internal environment data acquisition device 105 is a non-contact thermometer, the internal environment data acquisition device 105 includes a thermography and the like. When the internal environment data acquisition device 105 is a radiation thermometer, the internal environment data acquisition device 105 includes an irradiation portion and a light receiving portion. When the internal environment data acquisition device 105 is a hygrometer that measures a humidity, the internal environment data acquisition device 105 includes a moisture-sensitive film, a moisture-sensitive material, or the like. When the internal environment data acquisition device 105 is an illuminance meter that measures an illuminance, the internal environment data acquisition device 105 includes a photodiode, an optical filter, and the like. When the internal environment data acquisition device 105 is a barometer that measures an atmospheric pressure, the internal environment data acquisition device 105 includes a semiconductor and a chamber. The internal environment data acquisition device 105 may be configured to acquire data on one type of environmental state or may be configured to acquire data on a plurality of types of environmental states, or a plurality of internal environment data acquisition devices 105 that acquire data on different types of environmental states may be provided.

The door 112 is provided with a light 117 that notifies an operator of information such as abnormalities, and a button 118 that is pressed by the operator to open the door 112 when the door 112 is permitted to open (described later). When the operator presses the button 118 on the door 112, door opening determination processing (described later) is performed to determine whether the door 112 may be opened. When opening is permitted, the door 112 is unlocked and opened. When opening is not permitted (prohibited), the door 112 is locked and is not opened, and the operator is notified of the locking of the door by turning on the light 117, or the like. The door 112 has a heat insulation function, a light shielding function, a sealing function, and the like similar to the partition wall 101a of the analysis unit 101. When the door 112 is in a closed state, a heat insulation function, a light shielding function, a sealing function, and the like for the entire analysis unit 101 are held.

As illustrated in Figs. 2 and 3, disposed inside the analysis unit 101 are a sample management unit 109 that holds and manages a plurality of sample containers 11 for accommodating one or more samples to be analyzed, a sample installation unit 108 that holds the sample container 11 transported from the sample management unit 109 by a transport device (not illustrated), a light source 14 that irradiates the sample 12 of the sample container 11 held in the sample installation unit 108 with measurement light, a camera 15 that measures observation light (transmitted light, reflected light, scattered light, emitted light, and the like) obtained from the sample 12 by irradiation with measurement light from the light source 14, a control device 106 that controls the overall operation of the automatic analysis device 100 including the analysis unit 101, an internal environment control device 104 that performs control so that the environmental state inside the analysis unit falls within, for example, a predetermined internal environment specification range, an internal environment data acquisition device 105, and a door control device 110 that controls whether the door can be opened or closed.

The sample management unit 109 includes, for example, a laser scanner as a function of detecting whether the sample container 11 accommodating the sample 12 (biological sample) to be analyzed is installed in the sample management unit 109. When the sample management unit 109 includes the laser scanner as a detection function for the sample container 11, the sample management unit 109 includes a laser output unit, a lens, and the like as related components for detecting the presence of an object.

The sample installation unit 108 includes, for example, a laser scanner as a function of detecting whether the sample container 11 accommodating the sample 12 (biological sample) to be analyzed is installed in the sample installation unit 108. When the sample installation unit 108 includes the laser scanner as a detection function for the sample container 11, the sample installation unit 108 includes a laser output unit, a lens, and the like as related components for detecting the presence of an object.

The sample management unit 109 and the sample installation unit 108 may share the function of detecting whether the sample container 11 is installed in the sample installation unit 108.

The sample management unit 109 does not need to be disposed inside the analysis unit 101, and may be configured independently outside the analysis unit 101 (or outside the automatic analysis device 100).

The light source 14 is, for example, a light emitting diode or other light emitters. The camera 15 receives light using an imaging element configured by, for example, a photodiode, and measures the amount of received light as a brightness value. The camera 15 may be, for example, a one-dimensional optical sensor or the like, or may be configured to include an image sensor lens such as CMOS, a filter, and the like and capture an image.

The control device 106 includes a circuit board, software, and the like, calculates a transmittance of light, the amount of scattered light, a frequency (color of the specimen), the amount of light emitted from a fluorescent material contained in the sample 12, and the like of the sample (specimen) 12 from observation light measured by the camera 15 while controlling the amount of light irradiated by the light source 14, an exposure time of the camera 15, and the like, and stores the calculated results in a storage unit 106a or the like as measurement results.

The storage unit 106a stores a brightness value acquired by the camera 103 or control values used when controlling the amount of light irradiated by the light source, an exposure time of the camera, and the like by the control device 106. The storage unit 106a does not need to be disposed inside the analysis unit 101 (or the control device 106), and may be combined with an external system connected via a network, a universal serial bus (USB), or the like.

The internal environment control device 104 controls environmental states (for example, a temperature, a humidity, a brightness, an atmospheric pressure, and the like) inside the analysis unit 101, and has functions of, for example, a heating and cooling mechanism, a humidifying and dehumidifying mechanism, a brightness (illuminance) adjustment mechanism, and a pressurizing and depressurizing mechanism.

The door control device 110 includes a circuit board, software, and the like, and permits or prohibits opening of the door 112 based on a determination result of the control device 106. When opening of the door 112 is prohibited, the door 112 is locked in a closed state by a locking mechanism, which is not illustrated in the drawing. When opening of the door 112 is permitted, the locking mechanism is unlocked, and the door 112 can be opened. The function of the door control device 110 may be provided in the door 112.

Here, the light source 14 and the camera 15 configure a sample data acquisition unit 107 that analyzes a sample to be analyzed and acquires inspection data. The control device 106 and the door control device 110 configure a control device that prohibits opening of the door 122 when a sample 12 (sample container 11) for which analysis has not been completed by the sample data acquisition unit 107 exists in the sample installation unit 108 inside the analysis unit 101, the measurement result obtained by the internal environment data acquisition device 105 falls within the range of predetermined internal environment specifications, and the measurement result obtained by the external environment data acquisition device 102 falls outside the range of predetermined external environment specifications.

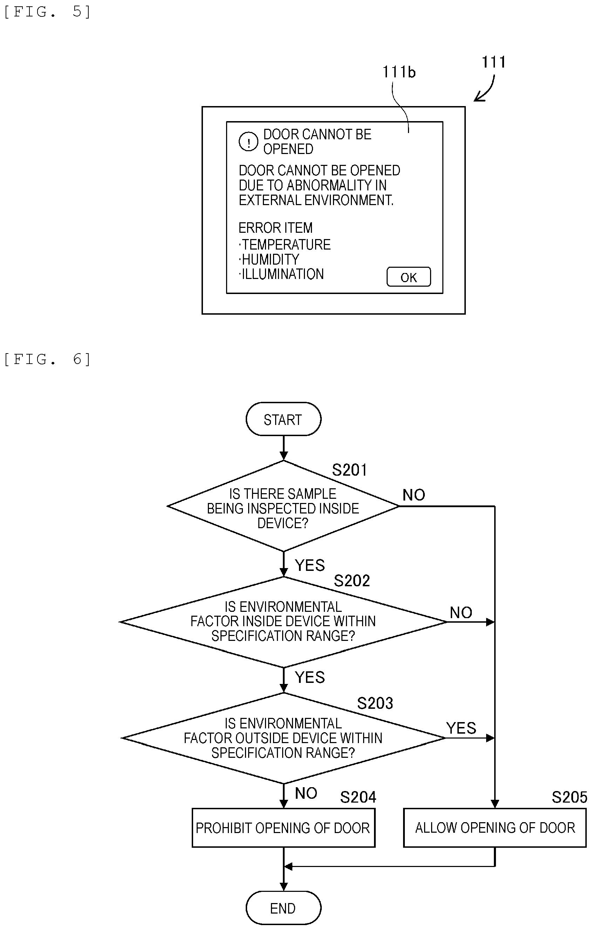

Figs. 4 and 5 are diagrams illustrating display examples of the screen display device. Fig. 4 is a diagram illustrating a state where a standard screen is displayed. Fig. 5 is a diagram illustrating a state where a screen showing information indicating that opening of a door is prohibited is displayed.

As illustrated in Fig. 4, in a normal state, for example, the screen display device 111 displays a power supply button for managing the power supply of the automatic analysis device 100, a door unlock button 111a for instructing unlocking for opening the door, and the like, in addition to sample information indicating information such as a sample to be analyzed and acquired data information indicating information such as analysis results. Here, when the door unlock button 111a (or the button 118 of the door 112) is pressed by an operator, the control device 106 performs door opening determination processing (described later) for determining whether the door 112 may be opened. When opening is permitted, the door 112 is unlocked and opened, and when opening is not permitted (prohibited), the door 112 is locked and not opened, and for example, a dialog screen showing information indicating that opening of the door is prohibited is displayed (see Fig. 5) .

As illustrated in Fig. 5, when the dialog screen showing information indicating that opening of the door 112 is prohibited is displayed on the screen display device 111, the reason why the door 112 cannot be opened may also be displayed.

Here, the door opening determination processing performed by the control device (the control device 106 and the door control device 110) will be described.

Fig. 6 is a flowchart showing processing contents of the door opening determination processing in the control device.

In Fig. 6, when the door unlock button 111a (or the button 118 of the door 112) is pressed by the operator, the control device 106 first determines whether there is a sample 12 (sample container 11) being analyzed in the analysis unit 101 based on information received from the sample installation unit 108 (step S201) .

When a determination result in step S201 is YES, it is then determined whether an environmental state inside the analysis unit 101 falls within a predetermined internal specification range (step S202) . The environmental state mentioned here is, for example, at least one of a temperature, a humidity, an atmospheric pressure, a brightness, and the like. The internal specification range indicates the conditions for the environmental state for obtaining stable and accurate analysis results by the sample data acquisition unit 107, and for example, a range obtained experimentally in advance is set.

When a determination result in step S202 is YES, subsequently, it is determined whether an environmental state outside the analysis unit 101 falls within a predetermined external specification range (step S203) . The environmental state mentioned here is, for example, a temperature, a humidity, an atmospheric pressure, a brightness, and the like, and corresponds to the same type of environmental state as the environmental state referred to in the determination in step S202. The external specification range may be set to the same range as the internal specification range, but a range obtained experimentally in advance may be set considering influence on the internal environmental state when the door 112 is opened.

When a determination result in step S203 is NO, the control device 106 prohibits the opening of the door 112. Here, the door control device 110 locks the door 112 and displays the fact that the opening of the door 112 is prohibited on the screen display device 111. As the reason why the opening of the door is prohibited, the fact that the environmental state outside the analysis unit 101 falls outside the specification range, the type of the target environmental state that is outside the specification range, and the like are displayed.

As described above, the control device (the control device 106 and the door control device 110) prohibits the opening of the door 112 when the determination results in steps S201 and S202 are YES and the determination result in step S203 is NO, that is, when there is a sample 12 for which analysis has not been completed inside the analysis unit 101, the measurement result obtained by the internal environment data acquisition device 105 falls within the range of predetermined internal environment specifications, and the measurement result obtained by the external environment data acquisition device 102 falls outside the range of predetermined external environment specifications.

When the determination result in either step S201 or S202 is NO, or when the determination result in step S203 is YES, the door control device 110 subsequently permits the opening of the door 112. Here, the door control device 110 unlocks the door 112 and displays the fact that the door 112 can be opened on the screen display device 111.

Effects of the present embodiment configured as described above will be described.

When a new sample is carried into an inspection device such as an automatic analysis device or a sample that has been inspected is carried out, it is necessary to open and close a door of the inspection device. Here, air outside the inspection device flows into the inspection device, and thus there is a possibility that an environment inside the inspection device will not be in an appropriate state, that is, the environment inside the inspection device will deviate from a range of specifications. In particular, when an environment outside the inspection device is outside a range of specifications, there is a possibility that the environment inside the inspection device will change significantly when air outside the inspection device flows into the inspection device, thereby affecting the inspection results.

On the other hand, in the present embodiment, a configuration is adopted such that an automatic analysis device that analyzes a sample to be analyzed to acquire inspection data includes an analysis unit that analyzes a sample within a region defined by a partition wall, an internal environment control device that controls an environmental state inside the analysis unit, an internal environment data acquisition device that measures the environmental state inside the analysis unit, an external environment data acquisition device that measures an environmental state outside the analysis unit, a door that is provided at the partition wall separating the inside and outside of the analysis unit and allows access from the outside to the inside of the analysis unit, and a control device that controls whether the door can be opened or closed, in which the control device prohibits opening of the door when there is a sample for which analysis has not been completed inside the analysis unit, a measurement result obtained by the internal environment data acquisition device falls within a range of predetermined internal environment specifications, and a measurement result obtained by the external environment data acquisition device falls outside a range of predetermined external environment specifications. Thus, it is possible to suppress the influence of the environment outside the inspection device on the environment inside the inspection device and suppress a decrease in the accuracy of inspection results due to changes in the environment inside the inspection device.

That is, according to the present embodiment, when the environment outside the device falls outside the specification range during the inspection of the sample, opening of the door of the device is prohibited, and air outside the device can be prevented from flowing into the device. That is, it is possible to reduce the influence of the outside of the device on the inside of the device and maintain the environment inside the device within the specification range. Thereby, it is possible to reduce the risk of sample re-examination and sample readjustment, and consequently, to prevent sample loss and time loss.

After the opening of the door 112 is permitted in step S205 in Fig. 6, a limit may be provided on an opening time of the door 112. Thereby, it is possible to obtain an effect of preventing the environment inside the device from falling outside the specification range due to air outside the device flowing into the device over a long period of time.

After the door 112 is opened and closed once, the opening of the door 112 may be prohibited for a certain period of time, or the time during which the door 112 can be opened may be shortened. With such control, it is possible to suppress the possibility that the environment inside the device will fall outside the specification range due to frequent opening and closing of the door.

### <Second Embodiment>

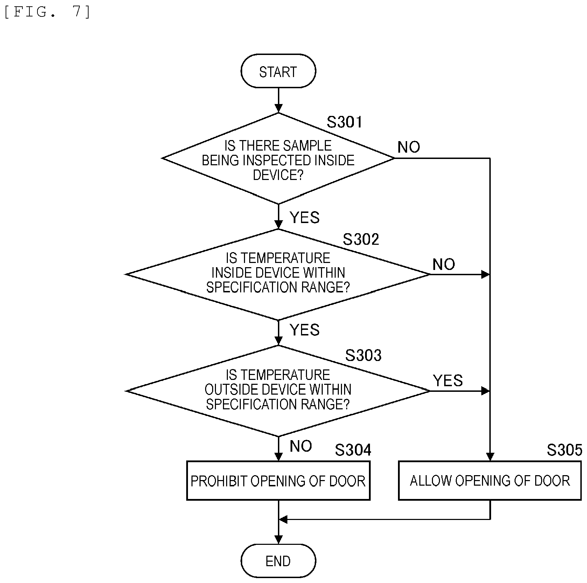

A second embodiment of the invention will be described with reference to Fig. 7.

The present embodiment shows a case where a temperature is specifically set as an environmental state that is a target of door opening determination processing.

Fig. 7 is a flowchart showing processing contents of door opening determination processing in a control device according to the present embodiment. In the drawing, descriptions of the same matters as those in the first embodiment will be omitted as appropriate.

In Fig. 7, when the door unlock button 111a (or the button 118 of the door 112) is pressed by the operator, the control device 106 first determines whether there is the sample 12 (sample container 11) being analyzed in the analysis unit 101 based on information received from the sample installation unit 108 (step S301).

When a determination result in step S301 is YES, subsequently, it is determined whether a temperature inside the analysis unit 101 falls within a predetermined internal specification range (step S302).

When a determination result in step S302 is YES, subsequently, it is determined whether a temperature outside the analysis unit 101 falls within a predetermined external specification range (step S303).

When a determination result in step S303 is NO, the control device 106 prohibits the opening of the door 112. Here, the door control device 110 locks the door 112 and displays the fact that the opening of the door 112 is prohibited on the screen display device 111. As the reason why the opening of the door is prohibited, the fact that the temperature outside the analysis unit 101 falls outside the specification range, and the like are displayed.

As described above, the control device (the control device 106 and the door control device 110) prohibits the opening of the door 112 when the determination results in steps S301 and S302 are YES and the determination result in step S303 is NO, that is, when there is a sample 12 for which analysis has not been completed inside the analysis unit 101, the measurement result related to the temperature obtained by the internal environment data acquisition device 105 falls within the range of predetermined internal environment specifications, and the measurement result related to the temperature obtained by the external environment data acquisition device 102 falls outside the range of predetermined external environment specifications.

When the determination result in at least one of steps S201 and S202 is NO, or when the determination result in step S203 is YES, the door control device 110 subsequently permits the opening of the door 112. Here, the door control device 110 unlocks the door 112 and displays the fact that the door 112 can be opened on the screen display device 111.

Other configurations are the same as those in the first embodiment.

The same effects as those in the first embodiment can also be obtained in the present embodiment configured as described above.

### <Third Embodiment>

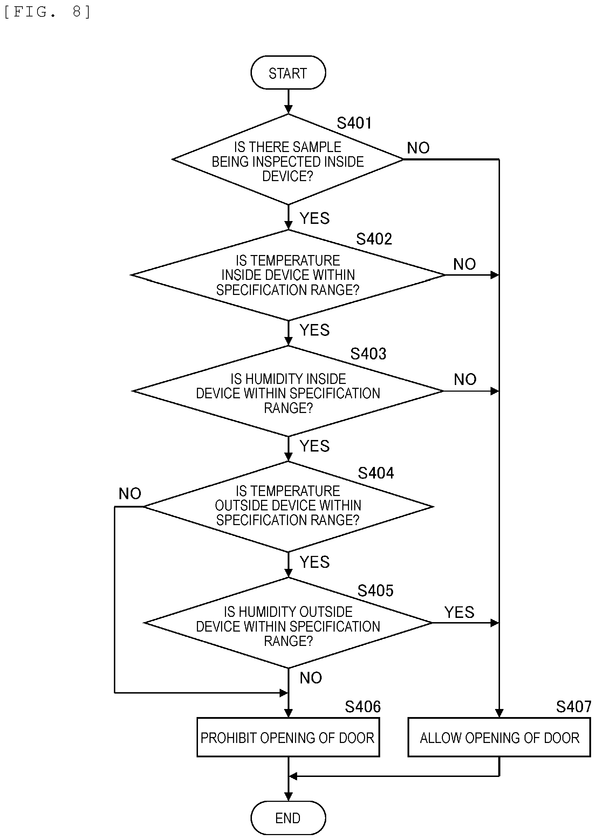

A third embodiment of the invention will be described with reference to Fig. 8.

The present embodiment shows a case where a temperature and a humidity are specifically set as environmental states that are targets of door opening determination processing.

Fig. 8 is a flowchart showing processing contents of door opening determination processing in a control device according to the present embodiment. In the drawing, descriptions of the same matters as those in the first and second embodiments will be omitted as appropriate.

In Fig. 8, when the door unlock button 111a (or the button 118 of the door 112) is pressed by the operator, the control device 106 first determines whether there is the sample 12 (sample container 11) being analyzed in the analysis unit 101 based on information received from the sample installation unit 108 (step S401).

When a determination result in step S401 is YES, subsequently, it is determined whether a temperature inside the analysis unit 101 falls within a predetermined internal specification range (step S402), and it is determined whether a humidity inside the analysis unit 101 falls within a predetermined internal specification range (step S403).

When determination results in steps S402 and S403 are YES, subsequently, it is determined whether a temperature outside the analysis unit 101 falls within a predetermined external specification range (step S404), and it is determined whether a humidity outside the analysis unit 101 falls within a predetermined external specification range (step S405).

When the determination result in at least one of steps S402 and S403 is NO, the control device 106 prohibits the opening of the door 112. Here, the door control device 110 locks the door 112 and displays the fact that the opening of the door 112 is prohibited on the screen display device 111. As the reason why the opening of the door is prohibited, the fact that at least one of the temperature and humidity outside the analysis unit 101 falls outside the specification range, and the like are displayed.

As described above, the control device (the control device 106 and the door control device 110) prohibits the opening of the door 112 when the determination results in steps S401 to S403 are YES and at least one of the determination results in steps S404 and S405 is NO, that is, when there is a sample 12 for which analysis has not been completed inside the analysis unit 101, the measurement results related to the temperature and humidity obtained by the internal environment data acquisition device 105 fall within the range of predetermined internal environment specifications, and at least one of the measurement results related to the temperature and humidity obtained by the external environment data acquisition device 102 falls outside the range of predetermined external environment specifications.

When the determination result in at least one of steps S401 to S403 is NO, or when the determination results in steps S404 and S404 are YES, subsequently, the door control device 110 permits the opening of the door 112. Here, the door control device 110 unlocks the door 112 and displays the fact that the door 112 can be opened on the screen display device 111.

The other configurations are the same as those in the first and second embodiments.

The same effects as those in the first and second embodiments can also be obtained in the present embodiment configured as described above.

### <Appendix>

The invention is not limited to the above-described embodiments, and includes various modification examples and combinations within the scope of the invention.

For example, the degree of a difference between environmental states inside and outside the analysis unit may be added to determination conditions for determining whether the opening of the door may be prohibited to adopt a configuration in which the opening of the door is prohibited when there is a sample for which analysis has not been completed inside the analysis unit, measurement results (a temperature, a humidity, and the like) in the internal environment data acquisition device fall within the range of predetermined internal environment specifications, and a difference between measurement results obtained by the internal environment data acquisition device and measurement results obtained by the external environment data acquisition device falls outside the range of predetermined difference environment specifications.

The invention is not limited to having all of the configurations described in the above-described embodiments, and also includes configurations in which some of the configurations are deleted. With regard to the above-described configurations, functions, and the like, a portion or the entirety thereof may be implemented by being designed as an integrated circuit, for example. The above-described configurations, functions, and the like may be implemented by software by a processor analyzing and executing programs for implementing each of the functions.

### Reference Signs List

- 11:: sample container
- 12:: sample
- 14:: light source
- 15:: camera
- 100:: automatic analysis device
- 101:: analysis unit
- 101a:: partition wall
- 102:: external environment data acquisition device
- 103:: camera
- 104:: internal environment control device
- 105:: internal environment data acquisition device
- 106:: control device
- 106a:: storage unit
- 107:: sample data acquisition unit
- 108:: sample installation unit
- 109:: sample management unit
- 110:: door control device
- 111:: screen display device
- 111a:: door unlock button
- 112:: door
- 117:: light
- 118:: button

## Claims

1. An automatic analysis device that analyzes a sample to be analyzed to acquire inspection data, the device comprising:
an analysis unit that analyzes the sample within a region defined by a partition wall;
an internal environment control device that controls an environmental state inside the analysis unit;
an internal environment data acquisition device that measures the environmental state inside the analysis unit;
an external environment data acquisition device that measures an environmental state outside the analysis unit;
a door that is provided at the partition wall separating the inside and outside of the analysis unit and allows access from the outside to the inside of the analysis unit; and
a control device that controls whether the door can be opened or closed, wherein
the control device prohibits opening of the door when there is a sample for which analysis has not been completed inside the analysis unit, a measurement result obtained by the internal environment data acquisition device falls within a range of predetermined internal environment specifications, and a measurement result obtained by the external environment data acquisition device falls outside a range of predetermined external environment specifications.

2. The automatic analysis device according to claim 1, wherein
when the control device prohibits opening of the door,
the control device permits opening of the door in at least one case among a case where the environmental state measured by the external environment data acquisition device falls within the range of the external environment specifications, a case where the environmental state measured by the internal environment data acquisition device falls outside the range of the internal environment specifications, or a case where all inspections for the sample inside the analysis unit have been completed.

3. The automatic analysis device according to claim 1 or 2, wherein the environmental states measured by the internal environment data acquisition device and the external environment data acquisition device are at least one of a temperature, a humidity, an atmospheric pressure, and a brightness.

4. The automatic analysis device according to claim 1 or 2, wherein the same range is set for the internal environment specifications and the external environment specifications.

5. The automatic analysis device according to claim 1 or 2, wherein the control device prohibits opening of the door when there is a sample for which analysis has not been completed inside the analysis unit, the measurement result obtained by the internal environment data acquisition device falls within the range of the predetermined internal environment specifications, and a difference between the measurement result obtained by the internal environment data acquisition device and the measurement result obtained by the external environment data acquisition device falls outside a range of predetermined difference environment specifications.
